# EUROPEAN PATENT APPLICATION

(11) **EP 2 544 030 A1**
(43) Date of publication of application: **09.01.2013**
(21) Application number: 11750322.7
(22) Date of filing: 18.02.2011
(51) Int. Cl.: G02B 1/11, B29D 11/00

(54) **OPTICAL ELEMENT AND METHOD OF MANUFACTURING OPTICAL ELEMENTS**

(30) Priority: 02.03.2010 JP 2010045144; 02.03.2010 JP 2010045143
(71) Applicant: Panasonic Corporation, Kadoma-shi Osaka 571-8501 (JP)
(72) Inventor: TANAKA, Kojiro, Osaka 540-6207 (JP); ABE, Shinya, Osaka 540-6207 (JP); WAKAYAMA, Keiichi, Osaka 540-6207 (JP)
(74) Representative: Vigand, Philippe
(86) International application number: PCT/JP2011/000908
(87) International publication number: WO 2011/108208

(57) **Abstract**

The present invention provides an optical element capable of reducing reflectance at whole bands of visible light. The optical element is characterized in that one of a plurality of concave sections or a plurality of convex sections are arranged on a surface at intervals smaller than a wavelength of visible light, and other not-being-arranged of the plurality of concave sections or the plurality of convex sections are each formed in each of the one arranged of the plurality of concave sections or the plurality of convex sections. The convex section may be formed in the concave section, or the concave section may be formed over the convex section. A ratio of a lateral cross-sectional area of the optical element itself in a transverse plane taken along a horizontal surface may continuously increase from an upper surface toward a lower surface of the optical element according to a depth between the upper surface and the lower surface of the optical element.

## Description

### Technical Field

The present invention relates to an optical element capable of reducing reflectance of a surface, and a method of manufacturing the optical elements.

### Background Art

Conventionally, in order to reduce reflectance of a sheet-shaped optical element surface, there is a method in which a refractive index and a thickness of each film of laminated layers are selected or controlled. According to the method, reflectance is reduced due to an interference effect provided by the laminated films.

However, according to the method using the plurality of laminated films, there is a limit to an amount of reduction in reflectance due to a limit of selection of the refractive index of the film material, and due to a limit of an optical design. Especially, according to the above method, it is difficult to reduce the reflectance at broad wavelength bands due to wavelength dependency of the reflectance.

As another approach to reduce the reflectance of the surface of the sheet-shaped optical element, there is a method in which many cone-shaped or bell-shaped structures each having a dimension smaller than a wavelength are arranged on a surface of the optical element. That is, research and development are variously performed for the method in which the reflectance is reduced not by the light interference but by a physical structure having many above-described structures (refer to non-patent documents 1 and 2, and patent documents 1 to 4).

### PRIOR ART DOCUMENT

### PATENT DOCUMENT

Patent document 1: JP 2008-158013 A
Patent document 2: JP 2008-176076 A
Patent document 3: JP 2008-304637 A
Patent document 4: JP 2009-109755 A

### NON-PATENT DOCUMENT

Non-patent document 1: Eric B. Grann, et al., J. Opti. Soc. Am. A, Vol. 12, No. 2, (1995) p. 333
Non-patent document 2: Kazuya Hayashibe, et al., SID 09 Digest (2009), p. 303

### Disclosure of Invention

### Problems to be Solved by the Invention

However, even with the optical element having the structures capable of reducing the reflectance as described above, there is a difference in reflectance reducing effect, depending on conditions of a pitch of the arranged structures and a wavelength. Thus, there is a problem of wavelength dispersion of the reflectance and the incident angle dependency. That is, when the pitch is narrowed, the wavelength dependency and the incident angle dependency can be more reduced, but the pitch cannot be physically miniaturized more than a certain level due to a limit to miniaturization of the structure. Thus, the optical element has not been able to reduce the reflectance at broad wavelength bands, that is, at the whole bands of visible light.

The present invention has been made to solve the above problems, and it is an object to provide an optical element capable of reducing reflectance at broad wavelength bands, that is, at whole bands of visible light, and a method of manufacturing the optical element.

### Means for Solving the Problems

The present invention has made to solve the above problems. According to an optical element in the present invention, one of a plurality of concave sections or a plurality of convex sections are arranged on a surface at intervals smaller than a wavelength of visible light, and other not-being-arranged of the plurality of concave sections or the plurality of convex sections are each formed in each of the one arranged of the plurality of concave sections or the plurality of convex sections.

In addition, according to a method of manufacturing a duplicate substrate for producing an optical element in the present invention, to manufacture the optical element in which one of a plurality of concave sections or a plurality of convex sections are arranged on a surface at intervals smaller than a wavelength of visible light, and other not-being-arranged of the plurality of concave sections or the plurality of convex sections are each formed in each of the one arranged of the plurality of concave sections or the plurality of convex sections, the method of manufacturing the duplicate substrate for producing the optical element includes
a first step of forming an organic layer on a surface of a substrate,
a second step of forming a resist layer on a surface of the organic layer,
a third step of intermittently irradiating the resist layer with a laser beam for exposure while moving the substrate,
a fourth step of developing the resist layer and forming a mask pattern of etching,
a fifth step of forming a concavo-convex structure on the surface of the substrate by performing an etching treatment using the mask pattern as a mask,
a sixth step of sputtering a conductive film on the surface of the substrate having the above concavo-convex structure, and forming an electroformed plate, in which at the time of forming the electroformed plate, a dimension of an opening section of the concave section and a depth of the concave section are adjusted in such a manner that before a metal used as the electroformed plate fills a space of the concave section in the concavo-convex structure, the metal covers a surface of the concave section, and
a seventh step of removing the conductive film section and an electroformed plate section from the surface of the substrate having the concavo-convex structure, to produce the duplicate substrate.

In addition, according to a method of manufacturing optical elements in the present invention, the method of manufacturing the optical elements using the duplicate substrate manufactured by the method of manufacturing the duplicate substrate for producing the optical element includes
a first step of applying a molten resin to a surface of the duplicate substrate, and
a second step of cooling the applied molten resin and removing the resin from the duplicate substrate to form the optical element.

### Effect of the Invention

According to the present invention, the optical element can reduce the reflectance at the broad wavelength bands.

### BRIEF DESCRIPTION OF THE DRAWINGS

Fig. 1(a) is a plan view of one part of an optical element in a first embodiment. Fig. 1(b) is a cross-sectional view and a perspective view of further one part of the optical element shown in the plan view in Fig. 1(a). Fig. 1(c) is a perspective view of a structure arranged in the optical element in the first embodiment.
Fig. 2 is a photograph image showing a surface shape of one part of the optical element in the first embodiment.
Fig. 3 is a photograph image showing a cross-sectional shape of the structure. Fig. 3(a) is an image showing a longitudinal cross-section in a columnar concave section. Fig. 3(b) is an image showing a cross-section in the columnar concave section, and a conical convex section (projection section) provided therein.
Fig. 4 is a graph showing reflectance characteristics of the optical element in the first embodiment.
Figs. 5 are views showing steps of manufacturing a master, and a step of manufacturing a duplicate substrate for producing the optical element, to produce the optical element in the first embodiment.
Fig. 6 is a view showing a longitudinal cross-section of one part of a formed stamper.
Fig. 7 is a photograph of one part of a stamper surface.
Fig. 8(a) is a plan view of one part of an optical element in a second embodiment. Fig. 8(b) is a cross-sectional view and a perspective view of further one part of the optical element shown in the plan view in Fig. 8(a). Fig. 8(c) is a perspective view of a structure arranged in the optical element in the second embodiment.

### Modes for Carrying Out the Invention

An optical element in an embodiment of the present invention is a sheet-shaped optical element formed in such a manner that many fine structures are arranged in a planar shape. The individual structure is arranged at a pitch of several hundred nm.

The inventor has confirmed that reflectance can be reduced at broad wavelength bands by employing the optical element according to the present invention.

### <First embodiment>

Hereinafter, a first embodiment of the present invention will be described with reference to the drawings.

### 1. Configuration of optical element

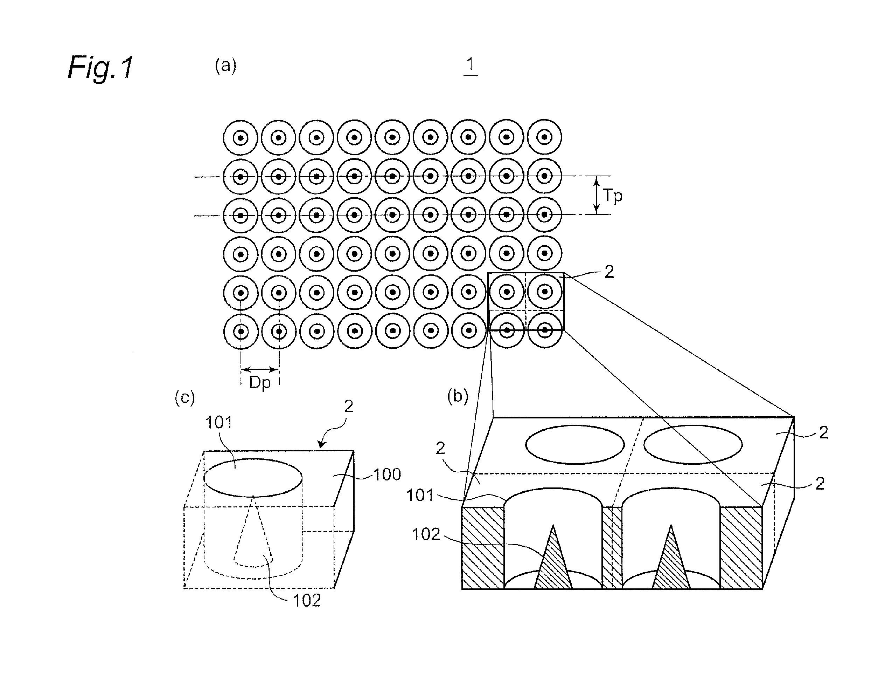

Fig. 1(a) is a plan view of one part of an optical element 1 in the first embodiment. Fig. 1(b) is a cross-sectional view and a perspective view of further one part of the optical element 1 shown in the plan view in Fig. 1(a). In addition, Fig. 1(c) is a perspective view of a structure 2 arranged in the optical element 1 in the first embodiment.

The optical element 1 is made of a nearly transparent material, in which many fine structures 2 shown in Figs. 1(b) and 1(c) are regularly arranged. According to the optical element 1 shown in Fig. 1, the many structures 2 are arranged at a track pitch of Tp in a longitudinal direction and at a dot pitch of Dp in a lateral direction. In addition, in this specification, it is assumed that a row of the structures 2 in the lateral direction in Fig. 1(a) is referred to as a "track".

### 1.1. Configuration of structure

Each structure 2 includes a cubic body section 100, a columnar concave section 101 provided in the body section 100, and a convex section (hereinafter, referred to as a "projection section") 102 provided in the concave section 101. In addition, the individual body section 100 is not independently arranged, but the body sections 100 are continuously and integrally formed as will be described below.

According to the structure 2 shown in Figs. 1(b) and 1(c), the concave section 101 is columnar in shape. That is, a shape of a lateral cross-section of the concave section 101 taken along a horizontal surface is a circle. In addition, the projection section 102 is conical in shape. Here, the shape of the lateral cross-section of the concave section 101 taken along the horizontal surface may be a polygon such as a triangle or a rectangle, and the projection section 102 may have a polygonal pyramid such as a triangular pyramid or a quadrangular pyramid.

In addition, according to the optical element 1 shown in Fig. 1, the structures 2 are arranged in a lattice shape, but the arrangement of the structures in the tracks is not limited to the lattice shape, and it may be a zigzag shape. Furthermore, it may be another arrangement such as a random shape. In addition, each size of the structures 2 (such as a diameter of the concave section 101, or a diameter or height of the projection section) arranged in plural may not be uniform.

### 1.2. Configuration example of structure

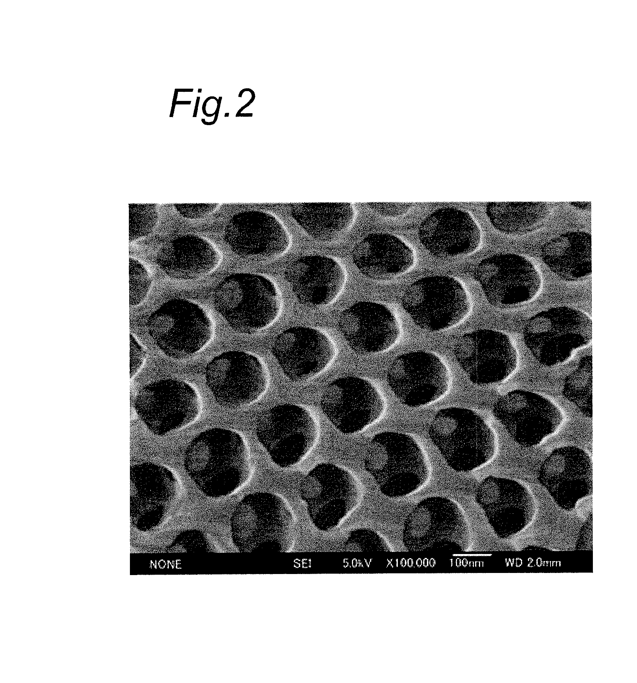

Fig. 2 is a photograph image showing a surface shape of one part of the optical element 1 in the first embodiment. The optical element 1 shown in Fig. 2 includes an ultraviolet curable resin, and the concave sections 101 in the structures 2 are formed at a constant pitch (200 nm in this example).

A base material forming the optical element 1 is a transparent body and can transmit visible light. The base material preferably has a refraction index provided between 1 and 3 so as to be able to serve as the transparent body. In addition, the constant pitch of the concave sections 101 in the structures 2 is preferably between 160 nm and 250 nm, but it may be another pitch.

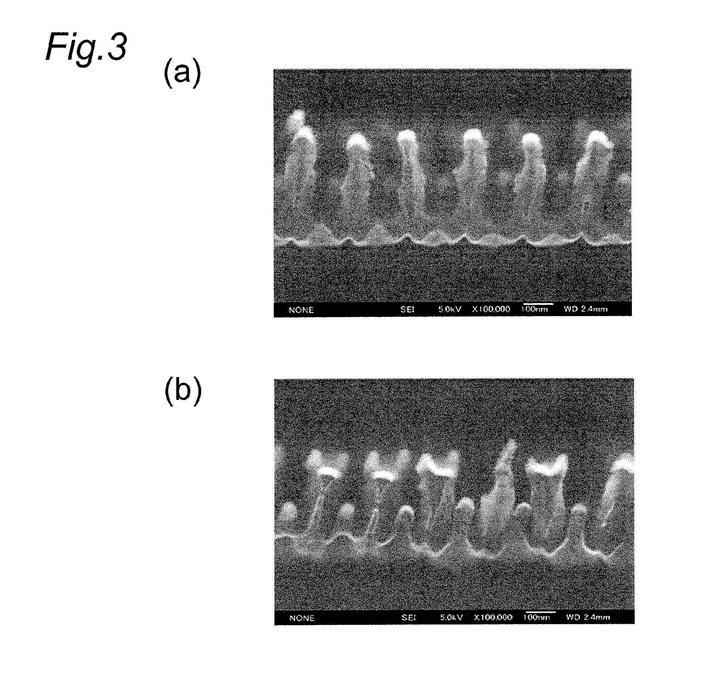

Fig. 3 is a photograph image showing a cross-sectional structure of the structure 2 of the optical element 1. An image shown in Fig. 3(a) shows a longitudinal cross-section in one part of the columnar concave section 101. A height of the columnar concave section 101 shown in Fig. 3(a) is about 375 nm. An image shown in Fig. 3(b) shows a cross-section in one part between the columnar concave section 101 and the conical projection section 102 provided therein. A height of the conical projection section 102 shown in Fig. 3(b) is about 225 nm. In addition, the above heights of the concave section 101 and the projection section 102 are one example.

### 2. Reflectance characteristics of optical element

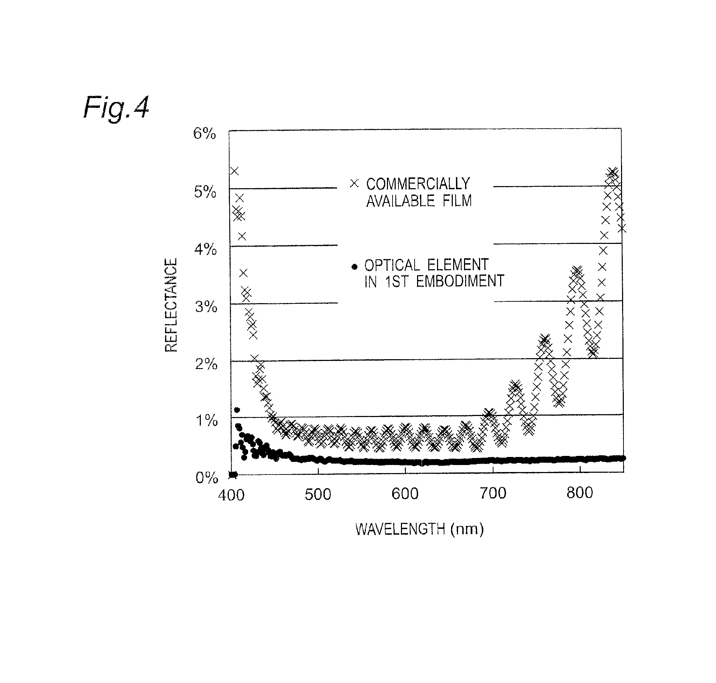

Fig. 4 is a graph showing reflectance characteristics of the optical element 1 in the first embodiment. In the graph shown in Fig. 4, a lateral axis shows a light wavelength, and a longitudinal axis shows a reflectance of a vertically incident light at that wavelength.

In Fig. 4, reflectance characteristics of a commercially available film are also shown for comparison. The commercially available film shown in Fig. 4 is a type having a conventional antireflection film including laminated films. According to the characteristics of the commercially available film, reflectance is suppressed at a wavelength of 450 nm or more in a visible range (400 nm to 700 nm). However, there is a fluctuation (variation) of the reflectance, depending on the wavelength. Especially, the reflectance is 1% or more at a short wavelength of 450 nm or less and at a long wavelength of 700 nm or more which is in an infrared region, and an antireflection effect is not satisfactory.

On the other hand, according to the characteristics of the optical element 1 in the first embodiment, the reflectance is lower than that of the commercially available film over the whole wavelength region, that is, the reflectance is low independently on the wavelength.

It is preferable to set the pitch of the arrangement of the structures 2 to a size equal to or less than the light wavelength, by which the reflectance is reduced, in the optical element 1 in the first embodiment. Especially, when the pitch of the arrangement of the structures 2 is set to a size equal to or less than a half of the wavelength, which is a limit of an optical resolution, the effect of reducing the reflectance is enhanced. Therefore, with respect to the visible light, the pitch is preferably equal to or less than 300 nm corresponding to about a half of a red-light wavelength which is long among wavelengths recognizable by human eyes, and furthermore, it is preferably equal to or less than 250 nm corresponding to a half or less of a green-light wavelength to which the human eyes are highly sensitive.

In addition, the deeper the concave section 101 of the structure 2 is, the higher the effect of reducing the reflectance is, so that a depth is preferably 200 nm or more. At this time, as for the depth of the concave section 101 and the height of the projection section 102 provided therein, the height of the inner conical projection section 102 is preferably equal to or less than the depth of the columnar concave section 101.

In addition, in order to enhance the effect of reducing the reflectance of the structure 2, it is preferable that a ratio of a lateral cross-sectional area of the structure 2 in a transverse plane taken along the horizontal surface continuously changes in accordance with the depth, and especially, it is preferable that the ratio continuously increases from an opening section of the concave section 101 toward a lower section (that is, from an upper surface to a lower surface of the optical element 1). In other words, a ratio of a lateral cross-sectional area of the optical element 1 itself in the transverse plane taken along the horizontal surface continuously changes according to the depth between the upper surface and the lower surface of the optical element 1 (especially, continuously increases from the opening section of the concave section 101 toward the lower section (that is, from the upper surface to the lower surface of the optical element 1)). Thus, the inner projection section 102 preferably does not protrude from an upper end of the columnar concave section 101.

In addition, a combination of the shape of the concave section 101 and the shape of the projection section 102 may be the columnar shape and the conical shape, or the quadrangular column and the quadrangular pyramid. Since it is preferable that the ratio of the lateral cross-sectional area of the structure 2 in the transverse plane taken along the horizontal surface continuously changes (increases) according to the depth between the upper surface and the lower surface of the optical element 1, the inner projection section more preferably has the nearly conical shape (such as conical shape, bell shape, or shape of Mount Fuji) or roughly quadrangular pyramid shape.

In addition, the optical element in the first embodiment may be formed of a material similar to a light-absorbing black body such as a material mainly containing carbon black in addition to a transparent material. Such optical element has a function as a light-absorbing body to reduce the surface reflection. That is, the optical element has characteristics not depending on the wavelength and similar to the black body. Furthermore, even when the material is metal such as Ni, the optical element can reduce its reflectance.

### 3. Method of manufacturing optical elements

Next, a description will be given of some examples of methods of manufacturing the optical elements 1 in the first embodiment. The method of manufacturing the optical elements in the first embodiment includes a step of manufacturing a master, a step of manufacturing a duplicate substrate for producing the optical element, and a step of forming the optical element. Hereinafter, the steps in the some examples of the manufacturing methods will be described with reference to the drawings.

### 3.1. First manufacturing method

### 3. 1. 1. Step of manufacturing master

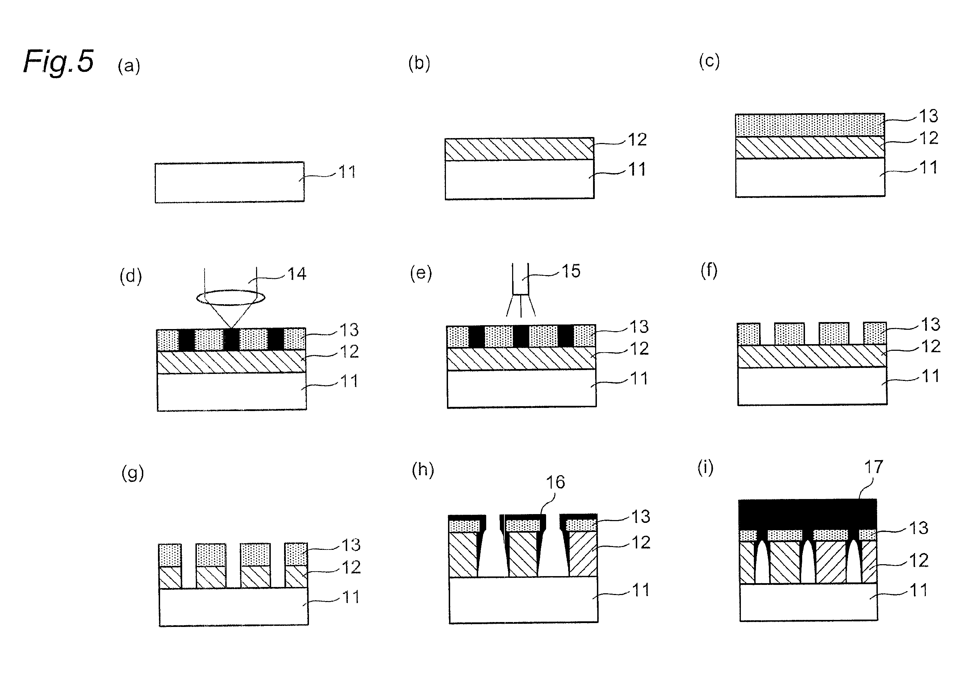

Figs. 5 are views showing the step of manufacturing the master and the step of manufacturing the duplicate substrate for producing the optical element, in a first manufacturing method to manufacture the optical element in the first embodiment. First, as shown in Fig. 5(a), a substrate 11 is prepared. This substrate 11 may be a silicon wafer.

Next, as shown in Fig. 5(b), an organic layer 12 is formed on a surface of the substrate 11. For example, an acrylic resin is used as the organic layer 12. A concentration of the acrylic resin may be 45%, and a thickness thereof may be 400 nm.

Then, as shown in Fig. 5(c), a resist layer 13 is formed. the resist layer 13 only has to be an inorganic resist, and as the inorganic resist, a transition metal such as partially oxidized film of MoW may be used. The partially oxidized film of MoW may be formed to be 30 nm in thickness. This resist layer 13 serves as a mask as will be described below.

Then, as shown in Fig. 5(d), the resist layer 13 on the substrate 11 is irradiated with a laser beam 14 serving as an exposure beam. According to the first manufacturing method, with an exposure device used in manufacturing an optical disk, the substrate 11 is exposed while being rotated. At this time, while the substrate 11 is moved in a radial direction, it is intermittently irradiated with the laser beam 14, and as a result, the resist layer 13 is exposed over its whole surface. In addition, through the exposure process, the track pitch (Tp) may be formed to be 250 nm long, and the dot pitch (Dp) may be formed to be 250 nm long.

The laser beam 14 may be a beam having a waveform whose amplitude periodically or non-periodically changes. By appropriately adjusting timing of a pulse for the exposure and the rotation of the substrate 11, dots formed through the exposure process can be arranged in a lattice shape or can be arranged in a dense state. Here, in the case where the dots are arranged in the dense state, they are preferably arranged such that "r" accounts for 70% or more of the dot pitch (Dp), wherein the "r" represents a diameter of a hole formed by the dot. In addition, in a case where the structures are formed in a large area on the optical element, it is preferable to use an X-Y drawing equipment.

Then, as shown in Fig. 5(e), a developing solution 15 is dropped on the resist layer 13 while the substrate 11 is rotated, and the resist layer 13 is developed. Thus, as shown in Fig. 5(f), a pattern serving as a mask for etching is formed. According to the first manufacturing method, TMAH having a concentration of 2.38% is used as the developing solution.

Then, using the pattern of the resist layer 13 formed on the substrate 11 as the mask, the organic layer 12 formed on the substrate 11 is subjected to an etching treatment. Thus, as shown in Fig. 5(g), a hole shape (concave section) of the organic layer 12 is formed on the substrate 11. The etching treatment may be performed by dry etching with an oxygen gas. According to the first manufacturing method, the etching treatment is performed with the oxygen gas at a flow rate of 300 sccm for one minute. Thus, the master is formed through the above steps.

### 3.1.2 Step of manufacturing duplicate substrate for producing optical element

Then, a conductive film 16 is formed on the substrate 11 which has been subjected to the etching treatment as shown in Fig. 5(g). The conductive film 16 may be formed, for example, by sputtering with Ni (refer to Fig. 5(h)). Then, an electroformed plate is formed on the substrate 11 shown in Fig. 5(h) (refer to Fig. 5(i)). The electroforming process is performed with Ni.

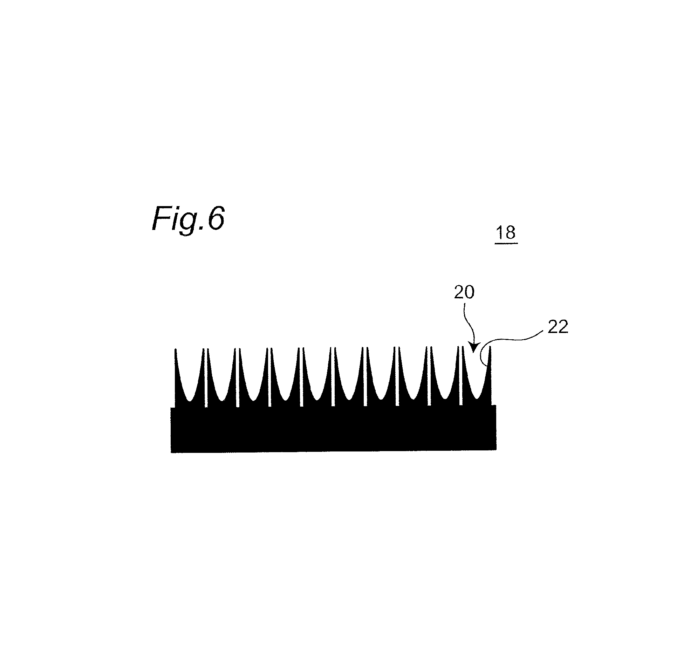

The conductive film section and the electroformed plate section are removed from the substrate 11 in Fig. 5(i), whereby a stamper (duplicate substrate for producing the optical element) 18 is formed as shown in Fig. 6.

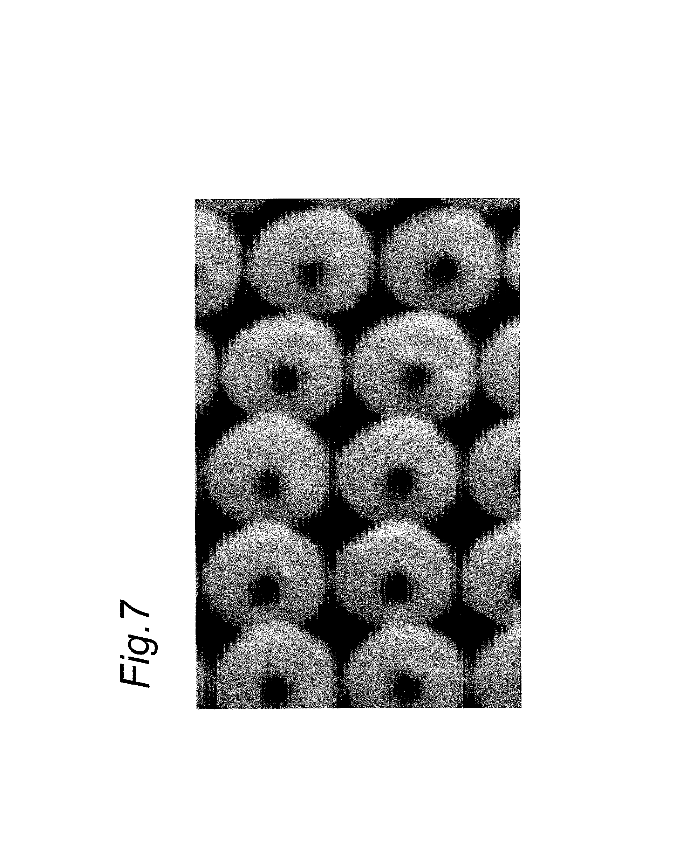

Fig. 6 is a view showing a longitudinal cross-section of one part of the formed stamper 18. In addition, Fig. 7 is a photograph image of one part of a surface of the stamper 18.

When the electroformed plate is formed as shown in Fig. 5(i), it is necessary to adjust the dimension of an opening section of the hole (concave section) and a depth of the hole (concave section) so that Ni covers a surface of the hole before the space of the hole (concave section) of the master is filled with Ni. That is, it is necessary to adjust the dimension of the opening section of the hole (concave section) and the depth of the hole (concave section) so that a volume of Ni entering the hole (concave section) is smaller than a volume of the space of the hole (concave section). In this way, a shape of a substrate structure 20 of the stamper 18 formed as shown in Fig. 6 is not just a columnar shape, but a columnar shape having a dent 22 in its center because of deficient Ni.

### 3.1.3. Step of forming optical element

Thus, the optical element 1 is formed with the stamper 18 produced as described above. More specifically, a molten resin is applied to the stamper 18, and the applied resin is cooled and removed from the stamper 18, whereby the optical element 11 is formed. In order to ensure removability from the stamper 18, the resin is preferably a material which is still flexible after cooled. According to the first manufacturing method, PC is used as the resin.

### 3.2. Second manufacturing method

A description will be given of a second manufacturing method to manufacture the optical element 1 in the first embodiment. The second manufacturing method is basically similar to the first manufacturing method, and includes the step of manufacturing the master, the step of manufacturing the duplicate substrate for producing the optical element, and the step of forming the optical element. The steps will be described with reference to Fig. 5, similar to the first manufacturing method.

### 3.2.1. Step of manufacturing master

As shown in Fig. 5(a), the substrate 11 is prepared. This substrate 11 may be a quartz substrate or sodium glass.

Next, as shown in Fig. 5(b), the organic layer 12 is formed on the surface of the substrate 11. For example, a novolac resin or a chemically-amplified resin is used as the organic layer 12.

Then, as shown in Fig. 5(c), the resist layer 13 is formed. The resist layer 13 only has to be an inorganic resist, and as the inorganic resist, an oxide of TePd may be used. The oxide of TePd may be formed as a film having a thickness of 40 nm. This resist layer 13 serves as the mask.

Then, as shown in Fig. 5(d), the resist layer 13 on the substrate 11 is irradiated with the laser beam 14 as the exposure beam. According to the second manufacturing method also, with the exposure device used in manufacturing the optical disk, the substrate 11 is exposed while being rotated. According to the second manufacturing method, through the exposure process, the track pitch (Tp) may be formed to be 200 nm long, and the dot pitch (Dp) may be formed to be 200 nm long.

Then, as shown in Fig. 5(e), the developing solution 15 is dropped on the resist layer 13 while the substrate 11 is rotated, and the resist layer 13 is developed. Thus, as shown in Fig. 5(f), the pattern serving as the mask for etching is formed. According to the second manufacturing method, an inorganic developing solution (made by Rohm and Haas Company) is used as the developing solution.

Then, using the pattern of the resist layer 13 formed on the substrate 11 as the mask, the organic layer 12 formed on the substrate 11 is subjected to the etching treatment. Thus, as shown in Fig. 5(g), the hole shape (concave section) of the organic layer 12 is formed on the substrate 11. The etching treatment may be performed by dry etching, for example, with an argon gas. According to the second manufacturing method, the etching treatment is performed with the argon gas at a flow rate of 400 sccm for five minutes. Thus, the master is formed through the above steps.

### 3.2.2 Step of manufacturing duplicate substrate for producing optical element

Then, the conductive film 16 is formed on the substrate 11 which has been subjected to the etching treatment as shown in Fig. 5(g). The conductive film 16 may be formed, for example, by sputtering with a partially oxidized film of Ni (refer to Fig. 5(h)). In addition, an electroformed plate 17 is formed on the substrate 11 shown in Fig. 5(h) (refer to Fig. 5(i)). The electroforming process is performed with Ni.

The conductive film section and the electroformed plate section shown in Fig. 5(i) are removed from the substrate 11, whereby the stamper (duplicate substrate for producing the optical element) 18 is formed as shown in Fig. 6.

### 3.2.3. Step of forming optical element

Thus, the optical element 1 is formed with the stamper 18 produced as described above. More specifically, a UV curable resin is applied to the stamper 18, and the applied UV curable resin is cured by UV light and removed from the stamper 18, whereby the optical element 1 is formed. In order to ensure removability from the stamper 18, the UV curable resin is preferably a material which is still flexible after cooled. According to the second manufacturing method, for example, PMMA may be used as the UV curable resin.

### 3.3. Third manufacturing method

A description will be given of a third manufacturing method to manufacture the optical element 1 in the first embodiment. The third manufacturing method is also basically similar to the first manufacturing method, and includes the step of manufacturing the master, the step of manufacturing the duplicate substrate for producing the optical element, and the step of forming the optical element. The steps will be described with reference to Figs. 5, similar to the first manufacturing method.

### 3.3.1. Step of manufacturing master

The step of preparing the substrate 11 (Fig. 5(a)), and the step of forming the organic layer 12 (Fig. 5(b)) are executed similar to the second manufacturing method.

Then, as shown in Fig. 5(c), the resist layer 13 is formed. The resist layer 13 only has to be an inorganic resist, and as the inorganic resist, Ni may be used. The Ni may be formed as a film having a thickness of 40 nm. This resist layer 13 serves as the mask.

Then, the step of irradiating the resist layer 13 with the laser beam 14 (Fig. 5(d)), and the step of developing the resist layer 13 (Fig. 5(e)) are executed similar to the second manufacturing method.

Then, using the pattern of the resist layer 13 formed on the substrate 11 as the mask, the organic layer 12 formed on the substrate 11 is subjected to the etching treatment. Thus, as shown in Fig. 5(g), the hole shape (concave section) of the organic layer 12 is formed on the substrate 11. The etching treatment may be performed by dry etching, for example, with CHF3. According to the third manufacturing method, the etching treatment is performed with the CHF3 at a flow rate of 400 sccm for three minutes. Thus, the master is formed through the above steps.

### 3.3.2 Step of manufacturing duplicate substrate for producing optical element

Then, the conductive film 16 and the electroformed plate 17 are formed on the substrate 11 which has been subjected to the etching treatment (Fig. 5(h) and 5(i)), and the formed conductive film section and the electroformed plate section are removed from the substrate 11, so that the step of forming the stamper (duplicate substrate for producing the optical element) 18 (Fig. 6) is executed similar to the second manufacturing method.

### 3.3.3. Step of forming optical element

Thus, the optical element 1 is formed with the stamper 18 produced as described above. More specifically, the stamper 18 is used as a mold, and the optical element 1 is formed by injection molding. In order to ensure removability from the stamper 18, the injection molded resin is preferably a material which is still flexible at the time of removing process. According to the third manufacturing method, for example, PET may be used as the resin for the injection molding.

### 3.4. Other manufacturing method

The method of manufacturing the optical elements in the first embodiment is not limited to the above. For example, the optical element can be formed by arranging a sheet on a back surface of a resin (such as UV curable resin), and removing the resin and the sheet from the stamper 18 with the UV curable resin left on the sheet.

### <Second embodiment>

According to the first embodiment, the structure 2 includes the cubic body section 100, the columnar concave section 101 provided in the body section 100, and the projection section 102 provided in the concave section 101. Even with another any shape, the same effect can be obtained as long as its structure is finer than the individual columnar shape or conical shape.

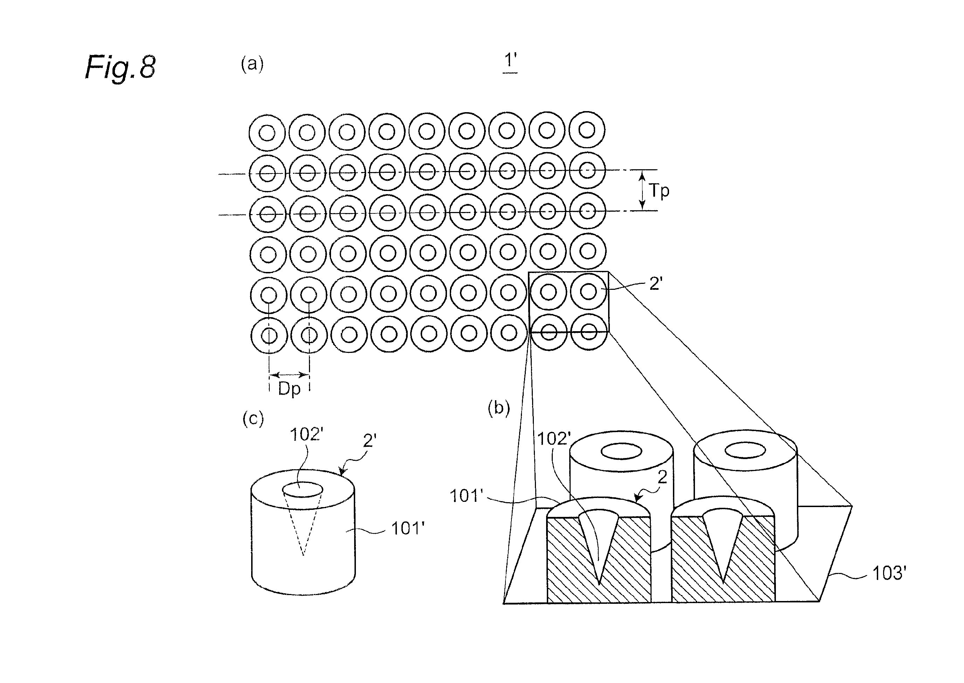

Fig. 8 (a) is a plan view of one part of an optical element 1' in a second embodiment. Fig. 8(b) is a cross-sectional view and a perspective view of further one part of the optical element 1' shown in the plan view in Fig. 8(a). In addition, Fig. 8(c) is a perspective view of a structure 2' arranged in the optical element 1' in the second embodiment.

According to the optical element 1' in the second embodiment shown in Fig. 8, the structure 2' has a shape in which the concave section and the convex section are reversed compared with the structure 2 in the optical element 1 in the first embodiment shown in Fig. 1.

The optical element 1' in the second embodiment is also made of a nearly transparent material, and the many fine structures 2' shown in Figs. 8(b) and 8(c) are regularly arranged at a track pitch of Tp in a longitudinal direction and at a dot pitch of Dp in a lateral direction.

The individual structure 2' includes a convex section 101', and a concave section (hereinafter, referred to as a "dent") 102' provided from a surface of the convex section 101' to an inner section. In addition, the structure 2' is arranged on a planar sheet 103' made of the same material as that of the structure 2'.

According to the structure 2' shown in Figs. 8(b) and 8(c), the convex section 101' is columnar in shape. In addition, while the dent 102' is conical in shape, it has an upside-down conical shape. That is, according to the dent 102', a lateral cross-sectional area of an opening section of an upper surface of the structure 2' is large, and the lateral cross-sectional area decreases toward a lower surface of the structure 2'. In addition, a depth of the dent 102' is smaller than a height of the convex section 101'.

The shape of the convex section 101' may be a polygonal column such as a triangular column or a quadrangular column. The shape of the dent 102' may be a polygonal pyramid such as a triangular pyramid or quadrangular pyramid. In addition, according to the optical element 1' shown in Fig. 8, the structures 2' are arranged in a lattice shape, but the arrangement of the structures 2' in the tracks is not limited to the lattice shape, and it may be a zigzag arrangement or another arrangement.

The optical element 1' in the second embodiment shown in Fig. 8 is manufactured by a manufacturing method in which with respect to the first to third manufacturing methods for the optical element 1 in the first embodiment, a step of producing a stamper in which the concavity and convexity of the stamper 18 shown in Fig. 6 are reversed is added thereto. According to the optical element 1' having the above configuration in the second embodiment, an effect of reducing the reflectance can be obtained similar to the optical element 1 in the first embodiment.

### <Conclusion>

As described above, the optical element in the embodiment of the present invention is formed such that the many fine structures are arranged in the planar shape. Therefore, according to the optical element in the embodiment, the reflectance can be reduced at broad wavelength bands.

### INDUSTRIAL APPLICABILITY

The present invention relates to an optical element capable of controlling optical characteristics by its structures provided on a surface, and a method of manufacturing the same, and more particularly to an optical element capable of reducing reflectance on a surface by its structures, and a method of manufacturing the same. The optical element according to the present invention can be useful for preventing reflection of a display. In addition, it can be used to prevent flare of a lens tube.

### EXPLANATION OF REFERENCES

- 1, 1': OPTICAL ELEMENT,
- 2, 2': STRUCTURE,
- 11: SUBSTRATE,
- 12: ORGANIC LAYER,
- 13: RESIST LAYER,
- 14: LASER BEAM,
- 15: DEVELOPING SOLUTION,
- 16: CONDUCTIVE FILM,
- 17: ELECTROFORMED PLATE,
- 18: STAMPER

## Claims

1. An optical element, wherein
one of a plurality of concave sections or a plurality of convex sections are arranged on a surface at intervals smaller than a wavelength of visible light, and other not-being-arranged of the plurality of concave sections or the plurality of convex sections are each formed in each of the one arranged of the plurality of concave sections or the plurality of convex sections.

2. The optical element according to claim 1, wherein
the convex section is formed in the concave section.

3. The optical element according to claim 2, wherein
a shape of a lateral cross-section taken along a horizontal surface in the concave section is a circle or a polygon.

4. The optical element according to claim 2, wherein
the convex section is in a shape of a cone or a polygonal pyramid.

5. The optical element according to claim 2, wherein
a depth of the concave section is larger than a height of the convex section.

6. The optical element according to claim 1, wherein
the concave section is formed into the convex section.

7. The optical element according to claim 6, wherein
the convex section is in a shape of a column or a polygonal column.

8. The optical element according to claim 6, wherein
the concave section is in a shape of a cone or a pyramid.

9. The optical element according to claim 6, wherein
a height of the convex section is larger than a depth of the concave section.

10. The optical element according to claim 1, wherein
the arranged concave sections or convex sections are arranged in a lattice shape.

11. The optical element according to claim 1, wherein
the concave sections or the convex sections are arranged in such a manner that a ratio of a diameter (r) of the concave section or the convex section to a dot pitch (Dp) of the arranged concave sections or convex section is equal to or more than 70%.

12. The optical element according to claim 1, wherein
an interval of arrangements of the arranged concave sections or convex sections is 250 nm or less and 160 nm or more.

13. The optical element according to claim 1, wherein
a base material forming the optical element transmits visible light.

14. The optical element according to claim 13, wherein
a refractive index of the base material is between 1 to 3.

15. The optical element according to claim 1, wherein
a base material forming the optical element is a nearly light-absorbing black body, and absorbs light while preventing the light from being reflected.

16. The optical element according to claim 1, wherein
a ratio of a lateral cross-sectional area of the optical element itself in a transverse plane taken along a horizontal surface continuously increases from an upper surface toward a lower surface of the optical element according to a depth between the upper surface and the lower surface of the optical element.

17. A method of manufacturing a duplicate substrate for producing an optical element in which one of a plurality of concave sections or a plurality of convex sections are arranged on a surface at intervals smaller than a wavelength of visible light, and other not-being-arranged of the plurality of concave sections or the plurality of convex sections are each formed in each of the one arranged of the plurality of concave sections or the plurality of convex sections, comprising:
a first step of forming an organic layer on a surface of a substrate;
a second step of forming a resist layer on a surface of the organic layer;
a third step of intermittently irradiating the resist layer with a laser beam for exposure while moving the substrate;
a fourth step of developing the resist layer and forming a mask pattern of etching;
a fifth step of forming a concavo-convex structure on the surface of the substrate by performing an etching treatment using the mask pattern as a mask;
a sixth step of sputtering a conductive film on the surface of the substrate having the concavo-convex structure, and forming an electroformed plate, in which at the time of forming the electroformed plate, a dimension of an opening section of the concave section and a depth of the concave section are adjusted in such a manner that before a metal used as the electroformed plate fills a space of the concave section in the concavo-convex structure, the metal covers a surface of the concave section; and
a seventh step of removing the conductive film section and the electroformed plate section from the surface of the substrate having the concavo-convex structure, to produce the duplicate substrate.

18. A method of manufacturing optical elements using the duplicate substrate manufactured by the method of manufacturing the duplicate substrate for producing the optical element according to claim 17, comprising:
a first step of applying a molten resin to a surface of the duplicate substrate; and
a second step of cooling the applied molten resin and removing the resin from the duplicate substrate to form the optical element.

19. A method of manufacturing optical elements using the duplicate substrate manufactured by the method of manufacturing the duplicate substrate for producing the optical element according to claim 17, comprising:
a first step of applying a UV curable resin to a surface of the duplicate substrate; and
a second step of curing the applied UV curable resin and removing the resin from the duplicate substrate to form the optical element.

20. A method of manufacturing optical elements using the duplicate substrate manufactured by the method of manufacturing the duplicate substrate for producing the optical element according to claim 17, comprising:
a first step of performing injection molding with the duplicate substrate serving as a mold.
